Europäisches Patentamt

European Patent Office

Office européen des brevets

(11) Numéro de publication: **0 248 706 B1**

# FASCICULE DE BREVET EUROPEEN

(45) Date de publication de fascicule du brevet:
**25.09.91**

(51) Int. Cl.⁵: **B32B 17/10, C03C 27/12, B65G 49/06**

(21) Numéro de dépôt: **87401162.0**

(22) Date de dépôt: **22.05.87**

(54) **Procédé de fabrication de verre feuilleté.**

(30) Priorité: **28.05.86 DE 3618065**

(43) Date de publication de la demande:
**09.12.87 Bulletin 87/50**

(45) Mention de la délivrance du brevet:
**25.09.91 Bulletin 91/39**

(84) Etats contractants désignés:
**AT BE CH DE ES FR GB IT LI SE**

(56) Documents cités:
**CH-A- 651 878**  **DE-A- 3 127 721**
**FR-A- 847 354**  **US-A- 3 518 137**
**US-A- 3 574 030**  **US-A- 4 427 729**

(73) Titulaire: **SAINT-GOBAIN VITRAGE INTERNATIONAL**
**18, avenue d'Alsace**
**F-92400 Courbevoie(FR)**

(84) Etats contractants désignés:
**BE CH ES FR GB IT LI SE AT**

Titulaire: **VEGLA VEREINIGTE GLASWERKE**
**Viktoriaallee 3-5**
**W-5100 Aachen(DE)**

(84) Etats contractants désignés:
**DE**

(72) Inventeur: **Gillner, Manfred**
**Rollefstrasse 52b**
**W-5100 Aachen(DE)**

(74) Mandataire: **Muller, René et al**
**SAINT-GOBAIN RECHERCHE 39, quai Lucien Lefranc**
**F-93304 Aubervilliers(FR)**

## Description

La présente invention concerne un procédé de fabrication de verre feuilleté à partir d'au moins deux feuilles de verre et d'une épaisseur intercalaire d'une pellicule de matière plastique collée aux deux feuilles de verre, selon lequel la pellicule de matière plastique est unie par calandrage à une feuille de verre par l'intermédiaire d'une matière adhésive durcissante et cette première feuille de verre pourvue de la pellicule de matière plastique est unie par calandrage à la second feuille de verre également par l'intermédiaire d'une matière adhésive durcissante.

Dans le cas du procédé actuellement utilisé d'une manière générale pour fabriquer des vitres en verre feuilleté, les deux feuilles de verre sont unies par calandrage à une pellicule de matière thermoplastique, en particulier de butyral polyvinylique, au cours d'un processus de préjonction, puis elles sont soumises à un pressage définitif, à chaud et sous pression, dans un autoclave. Ce procédé se déroule de manière discontinue et des autoclaves à pression relativement onéreux sont nécessaires à cet effet. On s'est, par conséquent, maintes fois efforcé de réaliser des procédés de fabrication de verre feuilleté qui permettent de renoncer au processus à autoclave. Dans un procédé de ce genre, l'épaisseur intercalaire en matière plastique a la forme d'une pellicule qui doit être unie aux deux feuilles de verre à l'aide de couches d'adhésif durcissant appliquées à l'état liquide.

Un procédé du type spécifié plus haut est décrit dans le document EU-A2 0 108 632. Dans ce procédé connu, la matière adhésive est appliquée sur la pellicule de matière plastique disposée sur un support plan à l'aide de buses d'extrusion et sous la forme de bandes espacées les unes des autres. La première feuille de verre est alors posée par le haut sur la pellicule de matière plastique revêtue de bandes de matière adhésive et l'ensemble de couches, constitué du support plan, de la pellicule de matière plastique revêtue d'adhésif et de la feuille de verre supérieure, est soumis à une première opération de calandrage au cours de laquelle la pellicule de matière plastique est unie, sans former de bulles, à la feuille de verre surjacente. Le stratifié formé de la feuille de verre supérieure et de la pellicule de matière plastique est alors soulevé de son support et est retourné de telle sorte que la pellicule de matière plastique soit orientée vers le haut. Sur la pellicule de matière plastique est alors appliquée, également en forme de bandes, la matière adhésive nécessaire pour assurer la jonction à la seconde feuille de verre. Sur l'épaisseur de matière plastique pourvue de matière adhésive en forme de bandes est alors posée la seconde feuille de verre qui, au cours d'une seconde opération de calandrage, est unie sans former de bulles au stratifié comprenant le verre et la matière plastique. A ceci s'ajoute l'opération d'irradiation destinée à faire durcir les couches d'adhésif.

Dans le cas d'un autre procédé connu de fabrication de verre feuilleté à l'aide de matières adhésives liquides pour assurer la jonction de l'épaisseur intercalaire de matière plastique aux feuilles de verre, la matière adhésive est appliquée en excès sur l'épaisseur intercalaire déjà collée à la première feuille de verre et la seconde feuille de verre est posée sur la matière adhésive et est collée à l'épaisseur intercalaire par une pression de calandrage massive, la seconde feuille de verre étant temporairement décollée de l'épaisseur intercalaire du côté d'entrée des cylindres par la matière adhésive sous l'influence de la pression de calandrage pour éliminer l'air occlus (DE-AS 27 37 740).

La difficulté particulière de la fabrication de verre feuilleté selon les procédés précités consiste, lors de la réunion par calandrage des feuilles de verre rigides, à éviter de manière sûre toute occlusion d'air. En particulier, dans le cas du deuxième procédé connu, on travaille pour cette raison essentiellement avec un excès de matière adhésive, la matière adhésive en excès formant un bourrelet entre les feuilles de verre rigides, immédiatement en amont de l'emprise des cylindres et étant latéralement expulsée d'entre les feuilles de verre au moment du calandrage. Cependant, la matière adhésive en excès expulsée latéralement et à l'extrémité postérieure des feuilles de verre lors du calandrage encrasse l'installation et complique le procédé.

L'invention a pour but de modifier le procédé mentionné dans le préambule de manière à rendre possible un réunion sans bulles des feuilles de verre d'une manière économique et sans encrassement de l'installation par de la matière adhésive sortant au niveau des bords.

Suivant l'invention, ce but est réalisé par le fait que la matière adhésive pour les deux couches d'adhésif est appliquée chaque fois sous la forme d'un film cohérent et uniforme en une épaisseur définitive et que la première feuille de verre pourvue de la pellicule de matière plastique ainsi que la seconde feuille de verre pourvue de la couche d'adhésif sont réunies par calandrage au moyen d'une paire de cylindres avec maintien d'un angle d'ouverture d'entrée de 2 à 6°.

La réunion par calandrage des deux feuilles de verre peut essentiellement s'effectuer dans n'importe quelle position, dans la mesure où, à l'aide de moyens mécaniques adéquats, on veille au maintien de l'angle d'ouverture nécessaire entre les deux feuilles de verre en amont de l'emprise des cylindres. Les deux feuilles de verre sont donc introduites dans l'emprise de calandrage dans un état plan sous cet angle réciproque, et pendant l'opération de calandrage, en amont de l'emprise de calandrage, elles sont maintenues écartées l'une de l'autre de sorte que le dit angle d'ouverture soit obtenu entre elles.

Dans une réalisation particulièrement avantageuse de l'invention, le procédé est conduit de telle façon que, lors de la réunion par calandrage des deux feuilles de verre, la seconde feuille de verre enduite d'adhésif et dont la face enduite est orientée vers le haut, et la première feuille de verre pourvue de la pellicule de matière plastique et dont la couche de matière plastique est orientée vers le bas, sont introduites dans l'emprise des cylindres, selon une orientation en substance horizontale et avec maintien de l'angle d'ouverture d'entrée de 2 à 6°.

Le support nécessaire pour maintenir l'angle d'ouverture peut, dans ce cas-ci, être réalisé d'une manière particulièrement simple par le fait que la feuille de verre supérieure pourvue de la couche de matière plastique est supportée par des rouleaux et/ou des éléments de support en contact avec la couche de matière plastique, tandis que la feuille de verre inférieure enduite de matière adhésive conserve sa position à l'intervention de son propre poids.

Le procédé conforme à l'invention aboutit d'une manière relativement simple à un produit entièrement exempt de bulles sans crainte d'un encrassement des dispositifs de transport et de calandrage par de la matière adhésive expulsée latéralement.

L'invention concerne, en outre, des dispositifs appropriés pour l'exécution du nouveau procédé.

Par l'expression "feuilles de verre", on entend essentiellement des feuilles de verre silicaté. Le cas échéant, une des feuilles de verre peut cependant aussi être faite d'une matière plastique transparente, par exemple un polycarbonate. Le procédé conforme à l'invention peut, en outre, aussi être utilisé pour la fabrication de vitres en verre feuilleté qui comprennent plus de deux feuilles de verre et/ou qui, en plus de deux feuilles de verre silicaté, comportent une autre couche ou feuille de recouvrement en une matière plastique transparente. Par souci de simplicité, on ne décrira ci-après que la fabrication d'une vitre en verre feuilleté dans sa forme la plus simple comprenant deux feuilles de verre silicaté et une pellicule de matière plastique intercalaire, mais l'invention n'est cependant limitée à une telle fabrication.

Des réalisations et des développements avantageux de l'invention font l'objet des revendications 2 à 13 et ressortiront, en outre, de la description suivante d'exemples de réalisation préférés, donnée avec référence aux dessins annexés, dans lesquels :

la Fig. 1 est une vue schématique d'une première forme d'exécution pour le procédé conforme à l'invention;

la Fig. 2 est également une vue schématique d'une deuxième forme d'exécution pour le procédé conforme à l'invention;

la Fig. 3 est une vue fragmentaire en perspective de la structure de base d'un dispositif destiné à réunir les feuilles de verre par calandrage selon le procédé conforme à l'invention, et

la Fig. 4 est une vue en perspective d'ensemble d'un dispositif calandreur et d'une section de durcissement suivante.

Le verre de sécurité feuilleté commercial, qui peut être fabriqué au moyen du procédé conforme à l'invention, est constitué, par exemple, de deux feuilles de verre silicaté chacune de 3 à 4 mm d'épaisseur et d'une couche intercalaire d'environ 0,5 mm d'épaisseur faite d'une pellicule de matière plastique. A titre de couche intercalaire, des pellicules de poly(chlorure de vinyle) souples se sont avérées particulièrement satisfaisantes, mais on peut bien entendu aussi utiliser des pellicules en d'autres matières plastiques, dans la mesure où elles possèdent les propiétés nécessaires et qu'elles peuvent être collées aux surfaces du verre.

Quant à l'adhésif utilisé, il doit s'agir d'un adhésif qui durcit sans dégagement de gaz. Par exemple, on peut utiliser à cet effet des colles de réaction telles que des colles à deux composants qui, à cause de la nécessaire absence de stries après durcissement, sont appliquées sous la forme de mélanges très homogènes des composants de réaction sur une des surfaces à réunir.

Au lieu de cela, dans le cas d'une colle de réaction à deux composants, un des deux composants peut, par exemple, être appliqué sur une des deux surfaces à réunir et l'autre composant peut être appliqué sur l'autre des deux surfaces à réunir de telle sorte que la réaction de durcissement ne se déroule avec certitude qu'après la juxtaposition des deux couches à réunir.

Particulièrement satisfaisantes se sont avérées des matières adhésives qui durcissent sous l'action de rayons UV. De telles matières adhésives sont décrites, par exemple, dans le brevet EU-PS 0 010 355 et dans la demande de brevet allemand P 35 23 140. Dans le cas de la réalisation du procédé décrite ci-après, on a utilisé avec un franc succès des matières adhésives à base de résine acrylique, telles qu'elles sont décrites dans la demande de brevet allemand mentionnée en dernier lieu.

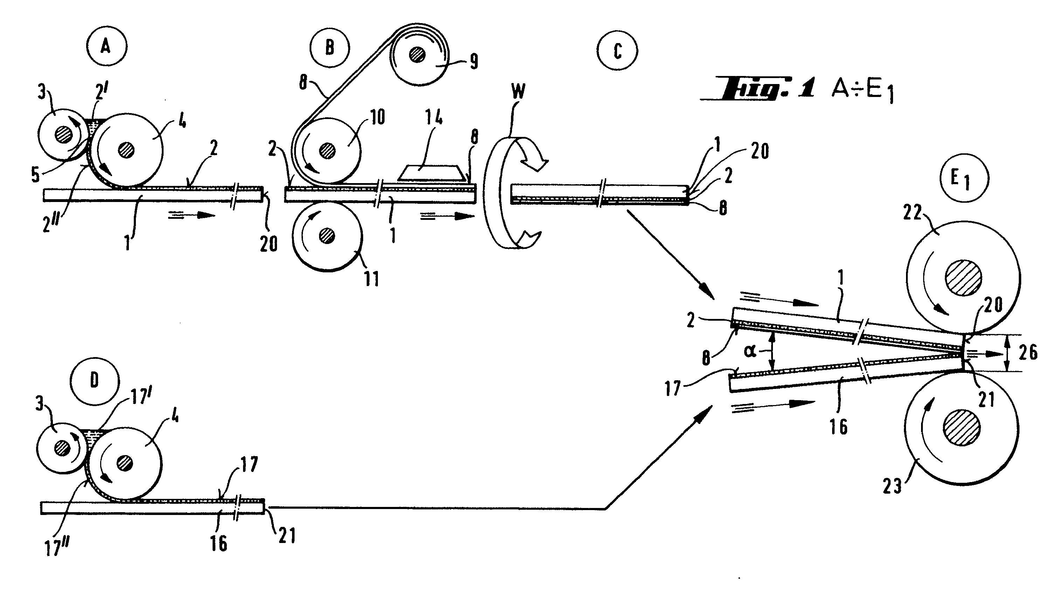

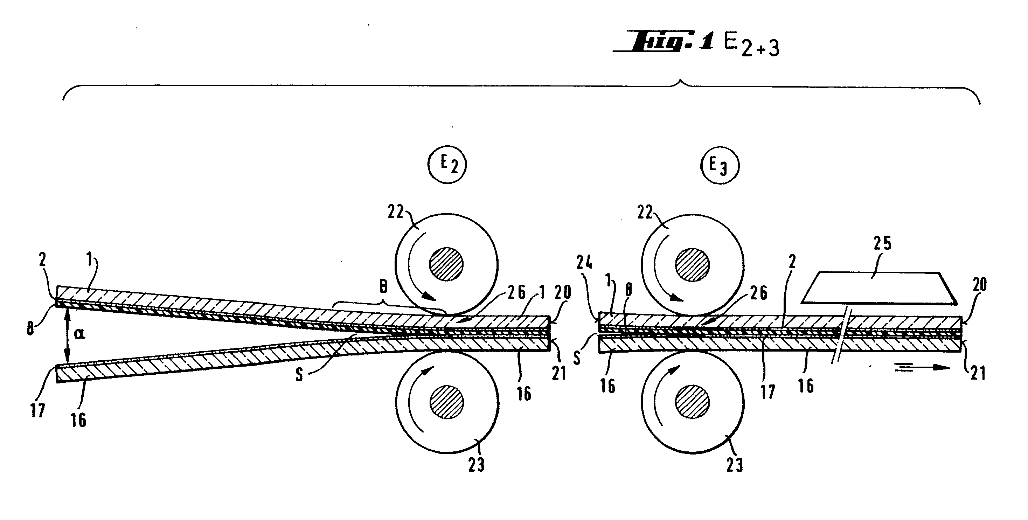

Comme la Fig. 1 le montre clairement, dans l'étape A du procédé, la matière adhésive 2' est appliquée sur la feuille de verre 1 à raison de la quantité nécessaire pour le collage, sous la forme d'une couche d'adhésif cohérente mince et uniforme 2. La colle décrite dans la demande de brevet P 35 23 140 doit, par exemple, être appliquée en une couche d'une épaisseur de 20 à 50 μm et, de préférence, de 25 à 40 μm, lorsqu'un collage sans bulles parfaitement transparent d'une pellicule de poly(chlorure de vinyle) souple doit être réalisé, sans que lors du calandrage, de la matière adhésive soit expulsée latéralement.

L'application uniforme de l'adhésif peut être effectuée, par exemple, par des procédés de projection ou de pulvérisation connus dans lesquels la matière adhésive est appliquée en une quantité réglée au moyen d'un ajutage de pulvérisation adéquat. Des machines d'enduction à rouleaux se sont avérées particulièrement avantageuses et leur principe de travail est illustré schématiquement sur la Fig. 1. Une telle machine d'enduction à rouleaux comporte deux rouleaux cylindriques 3, 4 tournant dans le même sens qui sont montés à rotation l'un à côté de l'autre et forment une emprise étroite 5. Ces deux rouleaux 3, 4 forment au-dessus de l'emprise 5 un creux en forme d'auge qui s'élargit vers le haut et qui contient une réserve de matière adhésive liquide 2'. Une mince couche uniforme 2" est entraînée à partir de la réserve d'adhésif 2 par le rouleau applicateur 4 qui roule sur la feuille de verre 1 à enduire et est appliquée sur la surface de la feuille de verre 1 sous la forme d'une couche cohérente uniforme 2. Dans le cas de ces machines d'enduction à rouleaux, l'épaisseur de la couche ou le volume appliqué peut être réglé finement par modification de la largeur de l'emprise 5 des rouleaux.

Une pellicule de poly(chlorure de vinyle) souple d'environ 0,5 mm d'épaisseur 8 est collée au course de l'étape suivante B du procédé sur la feuille de verre 1 ainsi enduite de la couche d'adhésif 2. La pellicule 8 est dévidée d'un rouleau 9 monté à rotation et est appliquée sur la couche adhésif 2 au moyen d'un rouleau de doublage 10 auquel est opposé un rouleau de support 11 destiné à soutenir la feuille de verre 1. La pression de la paire de rouleaux 10, 11 est réglée de telle façon qu'on obtienne une imprégnation complète, c'est-à-dire sans lacunes et sans bulles de la pellicule 8 au moyen de la couche d'adhésif 2. Vu dans la direction de transport de la feuille de verre 1, derrière la paire de rouleaux 10, 11 et au-dessus de la feuille de verre, est installée une source de rayonnement UV 14 qui s'étend sur toute la largeur de la feuille de verre 1 et dont l'intensité du rayonnement est fixée de telle sorte que la couche d'adhésif 2 durcisse à la vitesse de transport donnée. Le cas échéant, il n'est cependant pas nécessaire de durcir la couche d'adhésif déjà à ce stade du procédé, mais plutôt à un stade ultérieur, notamment après la réunion par calandrage finale des deux feuilles de verre.

A la sortie du poste de traitement qui réalise l'étape B du procédé, la feuille de verre 1 pourvue de la pellicule 8 est retournée (flèche directionnelle W) de telle sorte qu'elle soit orientée vers le bas. Il s'est avéré que la feuille de verre 1 doublée au moyen de la pellicule 8 peut être transportée avec la pellicule de matière plastique orientée vers le bas indifféremment sur une voie de transport classique comme un transporteur à rouleaux, ou un transporteur à bande, sans porter préjudice au procédé.

Pendant que s'effectue la préparation de la feuille de verre 1 ou, le cas échéant aussi, indépendamment de celle-ci dans le temps, la feuille de verre 16, qui représente la seconde feuille de verre simple destinée à la vitre en verre feuilleté, est pourvue dans une étape D du procédé d'une couche d'adhésif cohérente d'épaisseur uniforme 17 également à l'aide d'une machine d'enduction à rouleaux comportant une paire de rouleaux 3, 4 qui contient la matière adhésive 17', à l'état apte à la coulée, dans le creux en forme d'auge formé par les deux rouleaux 3, 4. L'épaisseur de la couche d'adhésif 17 correspond à l'épaisseur de la couche d'adhésif 2 appliquée sur la feuille de verre 1 dans l'étape A du procédé.

Les feuilles de verre 1 et 16 ainsi préparées sont à présent réunies par calandrage sans bulles dans l'étape $E_1$ - $E_3$ du procédé. A cet effet, les bords antérieurs 20, 21 des feuilles de verre 1, 2 sont juxtaposés ($E_1$) d'une manière telle que les deux feuilles de verre forment entre elles un angle α de 2 à 6° et de préférence d'environ 3 à 4°. Dans cette position relative, les deux feuilles de verre 1, 16 sont introduites dans l'emprise formée par les deux cylindres 22, 23.

Lorsque les cylindres 22, 23 ont attaqué les feuilles de verre et que l'opération de calandrage proprement dite a débuté, les deux feuilles de verre 1, 16 sont supportées ($E_2$), d'une manière appropriée telle que les sections des deux feuilles de verre se trouvant devant l'emprise des cylindres soient écartées par flexion l'une de l'autre et qu'un interstice d'ouverture S soit maintenu pendant la totalité de l'opération de calandrage. Pendant l'opération de calandrage, une flexion élastique des feuilles de verre se produit sur une distance B d'environ 20 à 40 cm selon l'épaisseur de la feuille de verre. Si l'on considère dans cette zone B les lignes de flexion des deux feuilles de verre et leurs tangentes, les tangentes de la ligne de flexion de la feuille de verre supérieure forment avec les tangentes de la ligne de flexion de la feuille de verre inférieure des angles qui débutent à 0° dans l'emprise des cylindres et croissent progressivement jusqu'à atteindre la valeur de l'angle d'ouverture α maximal.

Dans la dernière partie (E₃) de l'opération de calandrage, il ne subsiste qu'un très petit interstice d'ouverture S. Sur la dernière distance d'environ 10 cm à partir du bord postérieur 24, l'angle d'ouverture α ne doit plus être maintenu, car il n'y a plus de risque d'occlusion de bulles d'air.

Les feuilles de verre 1, 16 revêtues sont réunies par calandrage à l'aide de la paire de cylindres 22, 23 d'une manière telle qu'à la sortie de l'emprise des cylindres, on obtienne une vitre en verre feuilleté parfaitement transparente et sans bulles d'air incluses, et il ne reste qu'à faire durcir la couche d'adhésif 17 et, le cas échéant, la couche d'adhésif 2. A cet effet, derrière la paire de cylindres 22, 23 est installée une source de rayonnement UV 25 qui s'étend sur toute la largeur de la vitre en verre feuilleté et à l'intervention de laquelle 12 ou les couches d'adhésif durcissent. A la sortie de ce poste de travail qui effectue l'étape E₁ à E₃ du procédé, la fabrication de la vitre en verre feuilleté est terminée.

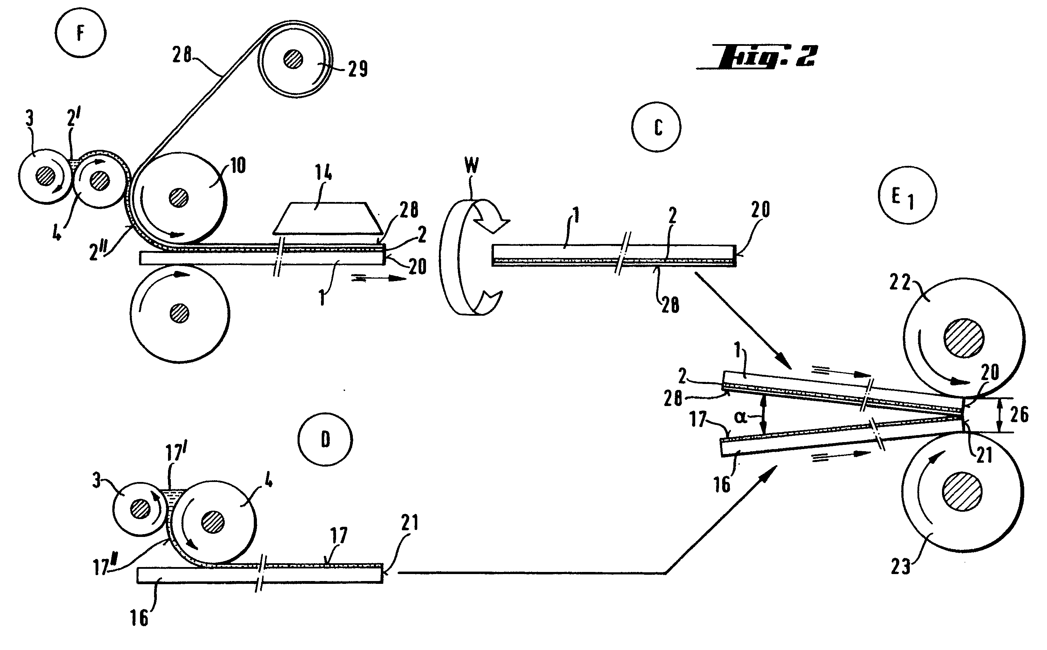

La conduite du procédé illustrée schématiquement sur la Fig. 2 est identique dans ses étapes C, D et E₁ à E₃ à celle du procédé décrit plus haut, de sorte que sur ce point on peut se référer à la description précédente. Contrairement à ce qui se passe dans le procédé décrit précédemment, dans le cas du procédé illustré sur la Fig. 2, l'application de la couche d'adhésif et le collage de la pellicule 28 dans une étape F du procédé s'effectuent dans un seul et même poste de travail. La pellicule 28 est à nouveau dévidée d'un rouleau d'alimentation 29 et passe autour d'un rouleau de doublage 10 au moyen duquel elle est appliquée sur la feuille de verre 1. La couche d'adhésif 2 n'est cependant dans ce cas pas appliquée sur la feuille de verre 1, mais sur la pellicule 28. A cet effet, la machine d'enduction à rouleaux pour l'adhésif, qui comprend le rouleau applicateur 4 à surface caoutchouteuse lisse et le rouleau doseur 3 en acier qui tourne dans le même sens que le premier, est installée immédiatement à côté du rouleau de doublage 10, de sorte que le rouleau applicateur 4 est pressé contre la pellicule 28 soutenue par le rouleau de doublage 10. Le rouleau applicateur 4 tourne dans le sens de l'avancement de la pellicule 28 et dans le sens opposé au rouleau de doublage 10 de sorte que, pendant son contact avec la pellicule 28, une couche d'adhésif d'épaisseur uniforme est appliquée sur cette pellicule 28. Derrière le rouleau de doublage 10, dans le sens d'avancement de la feuille de verre 1, est installée une source de rayonnement UV 14 à l'intervention de laquelle la couche d'adhésif 2 durcit.

Après le retournement (flèche de retournement W) de la feuille de verre 1 ainsi préparée, dans l'étape suivante C du procédé, la feuille de verre 1 est réunie par calandrage dans l'étape E₁ à E₃ du procédé à la feuille de verre 16 préparée dans l'étape D du procédé, comme décrit avec référence à la Fig. 1.

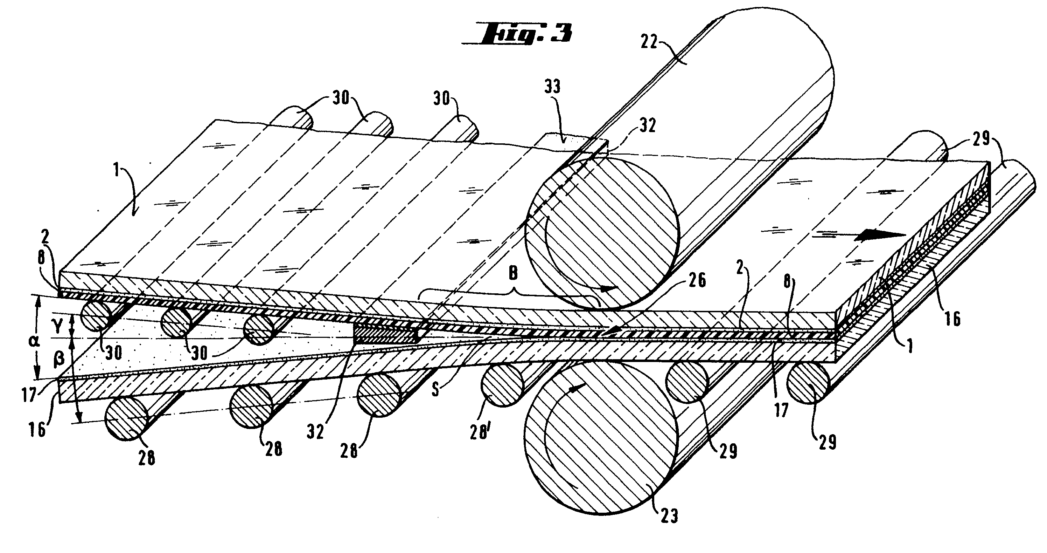

Pour la réalisation pratique de l'étape E₁ à E₃ du procédé, c'est-à-dire la réunion par calandrage des deux feuilles de verre 1 et 16 préparées, un dispositif dont les éléments principaux sont illustrés sur la Fig. 3, s'est avéré efficace. Ce dispositif comporte la paire de cylindres presseurs 22, 23 au moyen de laquelle les deux feuilles de verre 1 et 16 préparées sont réunies par calandrage sous une pression réglable, ainsi que des moyens qui assurent que l'angle d'ouverture α de 2 à 6° entre ces deux feuilles de verre soit maintenu avant l'entrée dans l'emprise de calandrage. La feuille de verre inférieure 16 est guidée, en amont de l'emprise de calandrage, sur une voie de transport formée de rouleaux transporteurs 28 et inclinée de l'angle β d'environ 2° par rapport à la voie de transport qui se rattache à l'arrière de l'emprise de calandrage et est formée des rouleaux transporteurs 29 ou d'une bande transporteuse correspondante. La feuille de verre 16 s'applique sur cette voie de transport inclinée sous l'effet de son propre poids.

Au-dessus de la feuille de verre 16, la feuille de verre supérieure 1 est amenée à l'emprise de calandrage également sur une voie de transport à rouleaux. Les derniers rouleaux transporteurs 30 de cette voie de transport supérieure, qui sont d'un diamètre relativement petit, sont disposés dans un plan incliné sous un angle γ. L'interstice d'ouverture S entre les deux feuilles de verre 1 et 16 est également atteint par une légère déformation des deux feuilles de verre, la feuille de verre inférieure 16 atteignant la légère flexion vers le bas nécessaire par son propre poids, tandis que la feuille de verre supérieure est soutenue de manière correspondante au niveau de sa face inférieure. Dans la dernière section immédiatement devant l'emprise de calandrage 26, le support de la feuille de verre supérieure 1 est assuré par une barre de glissement 32 qui est assujettie latéralement à côté des feuilles de verre et s'étend sans interruption sur toute la largeur des feuilles de verre. La barre 32 est en métal rigide à la flexion et présente une section cunéiforme qui va en diminuant en direction de l'emprise de calandrage. Sur sa surface supérieure, elle est pourvue d'une couche de glissement 33 à faible coefficient de friction qui peut, par exemple, être en poly(tétrafluoroéthylène).

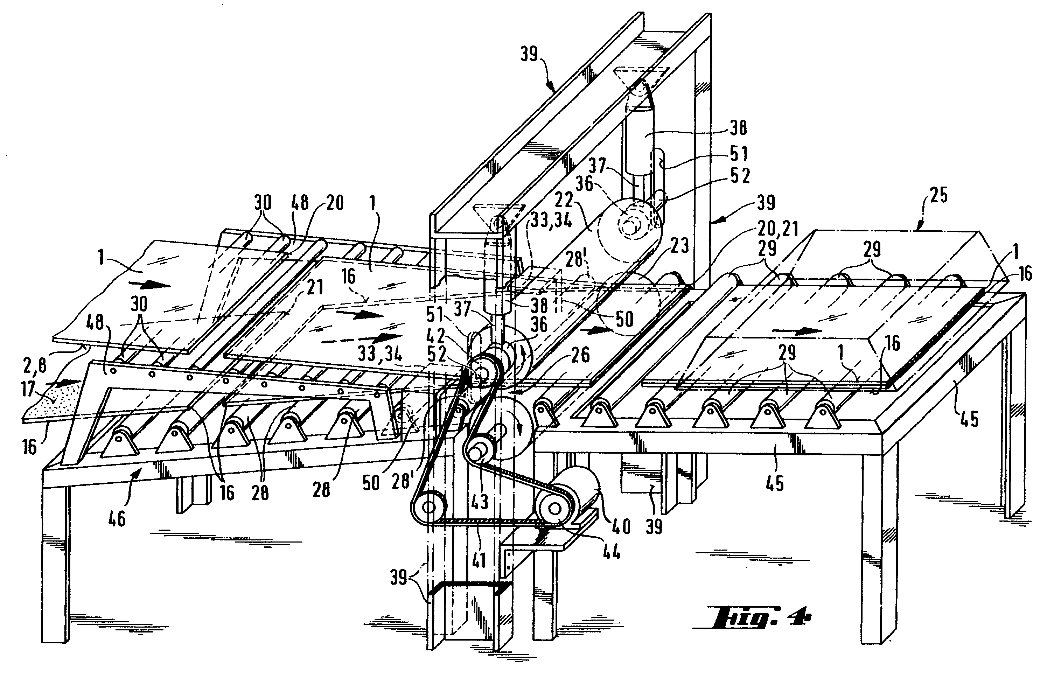

Lorsque les feuilles de verre 1, 16 ne sont pas très larges, un soutien de la feuille de verre supérieure 1 sur toute sa largeur n'est pas absolument indispensable. Il suffit dans ce cas, de prévoir simplement de petits patins de glissement cunéiformes 34 des deux côtés, comme illustré sur la Fig. 4.

Pour le reste, la Fig. 4 illustre par une vue en perspective encore une fois l'ensemble de l'installation utilisée pour la réunion par calandrage finale des deux feuilles de verre préparées 1 et 16. Les dispositifs utilisés pour préparer les deux feuilles de verre 1 et 16 à réunir par calandrage, sont connus comme tels et ne sont, par conséquent, pas illustrés en détail.

Le cylindre inférieur 23 de la paire de cylindres de pression est monté à l'intérieur du dispositif à une hauteur telle que sa ligne de contact pour la feuille de verre 16 se situe dans le plan de transport déterminé par les rouleaux transporteurs 29. Le cylindre de pression supérieur 22 est maintenu par des paliers latéraux 36 qui peuvent coulisser en hauteur dans deux glissières verticales 51, 52 et sont sollicités avec une pression réglable par des vérins 38 par l'intermédiaire de tiges de piston 37. Les vérins 38 sont fixés à un bâti 39. L'entraînement des deux cylindres presseurs 22, 23 s'effectue par l'intermédiaire d'un moteur-réducteur 40 dont le mouvement de rotation est transmis à partir de la roue d'entraînement 44 par l'intermédiaire d'une courroie dentée double face 41 aux roues dentées 42 et 43 des deux cylindres 22 et 23.

Les rouleaux transporteurs 29 derrière la paire de cylindres 22, 23, vus dans le sens d'avancement des feuilles de verre, sont montés sur le bâti 45 dans un plan horizontal. Les rouleaux transporteurs 28 situés devant la paire de cylindres 22, 23 sont montés sur le bâti 46 dans un plan s'élevant légèrement vers l'emprise de calandrage de sorte que le dernier rouleau transporteur 28' situé immédiatement devant le cylindre 23 occupe la position la plus haute.

Des supports latéraux 48 sont montés sur le bâti 46 et les rouleaux de support 30 tourillonnent dans ces supports et sont destinés à soutenir la feuille de verre supérieure 1. De plus, peu avant le cylindre presseur inférieur 23, des supports latéraux 50 sont disposés sur le bâti 46 et les patins de glissement 34 y sont fixés, ces patins assurant, immédiatement en amont de l'emprise de calandrage, le soutien de la feuille de verre supérieure 1. Ces patins 34 sont pourvus sur leur surface supérieure d'une garniture de glissement 33, par exemple en poly(tétrafluoroéthylène).

Les feuilles de verre 16 et 1 préparées sont posées à la main ou à l'aide de dispositifs transporteurs adéquats sur les rouleaux transporteurs 28 ou sur les rouleaux de support 30 et sont chaque fois orientées d'une manière telle que leurs bords antérieurs se touchent. Le moteur d'entraînement 40 pour les cylindres presseurs 22, 23 est alors mis sous tension et les deux feuilles de verre sont attaquées par la paire de cylindres et sont réunies par calandrage et transférées sur les rouleaux transporteurs 29. Au-dessus des rouleaux transporteurs 29 est installée la source de rayons UV 25 à l'intervention de laquelle la ou les couches d'adhésif durcissent. En aval de la source de rayons UV 25, la fabrication de la vitre en verre feuilleté est terminée.

## Revendications

1. Procédé de fabrication de verre feuilleté à partir d'au moins deux feuilles de verre et d'une épaisseur intercalaire d'une pellicule de matière plastique collée aux deux feuilles de verre, selon lequel la pellicule de matière plastique est unie par calandrage à une feuille de verre par l'intermédiaire d'une matière adhésive durcissante et cette première feuille de verre pourvue de la pellicule de matière plastique est unie par calandrage à la seconde feuille de verre également par l'intermédiaire d'une matière adhésive durcissante, caractérisé en ce que la matière adhésive pour les deux couches d'adhésif est appliquée chaque fois sous la forme d'un film cohérent et uniforme en une épaisseur définitive et que la première feuille de verre pourvue de la pellicule de matière plastique ainsi que la seconde feuille de verre pourvue de la couche d'adhésif sont réunies par calandrage au moyen d'une paire de cylindres avec maintien d'un angle d'ouverture d'entrée α de 2 à 6°.

2. Procédé suivant la revendication 1, caractérisé en ce que la première feuille de verre pourvue de la pellicule de matière plastique et la seconde feuille de verre pourvue de la couche d'adhésif sont unies par calandrage avec maintien d'un angle d'ouverture d'entrée de 3 à 4°.

3. Procédé suivant la revendication 1 ou 2, caractérisé en ce que les couches d'adhésif sont appliquées en leur épaisseur définitive sous la forme d'un film cohérent au moyen d'un dispositif de pulvérisation.

4. Procédé suivant la revendication 1 ou 2, caractérisé en ce que les couches d'adhésif sont appliquées en leur épaisseur définitive sous la forme d'une pellicule cohérente au moyen d'un dispositif enducteur à rouleaux.

5. Procédé suivant l'une quelconque des revendications 1 à 4, caractérisé en ce que la seconde feuille de verre enduite d'adhésif et dont la face enduite est orientée vers le haut, et la première feuille de verre pourvue de la pellicule de matière plastique et dont la couche de matière plastique est orientée vers le bas, sont introduites dans l'emprise des cylindres, selon une orientation en substance horizontale et avec maintien de l'angle d'ouverture d'entrée de 2 à 6°.

6. Procédé suivant la revendication 5, caractérisé en ce que la feuille de verre supérieure pourvue de la pellicule de matière plastique est supportée par des rouleaux en contact avec la pellicule de matière plastique, tandis que la feuille de verre inférieure enduite d'adhésif conserve sa position sous l'effet de son propre poids.

7. Procédé suivant la revendication 5 ou 6, caractérisé en ce que le support de la feuille de verre supérieure pourvue de la pellicule de matière plastique est assuré par des barres rigides ou des éléments de support sur lesquels la pellicule de matière plastique glisse.

8. Dispositif pour exécuter le procédé suivant l'une quelconque des revendications 1 à 7, comportant une paire de cylindres de pression entraînés (22, 23) pour réunir par calandrage les feuilles de verre (1, 16), un dispositif transporteur (28,28') en amont de la paire de cylindres (22, 23) et un dispositif transporteur (29) pour la vitre feuilletée derrière la paire de cylindres 22, 23, caractérisé en ce que le dispositif transporteur situé en amont de la paire de cylindres (22, 23) comporte un système de transport (rouleaux transporteurs 28) pour la feuille de verre enduite d'adhésif (16) et des rouleaux de support (30) disposés au-dessus de ce système de transport pour supporter et transporter la feuille de verre (1) garnie de la pellicule de matière plastique (8), et les rouleaux transporteurs (28) ainsi que les rouleaux de support (30) sont disposés chaque fois dans un plan, les deux plans formant un angle d'environ 2 à 6° et leur ligne d'intersection se situant à peu près dans l'emprise des cylindres.

9. Dispositif suivant la revendication 8, caractérisé en ce qu'immédiatement devant l'emprise des cylindres, un ou plusieurs organes de support (32, 34) pour la feuille de verre supérieure (1) est ou sont installés sur la bâti (46) portant les rouleaux transporteurs (28) et les rouleaux de support (30) sur la surface supérieure desquels glisse la pellicule de matière plastique (8) unie à la feuille de verre supérieure (1).

10. Dispositif suivant la revendication 9, caractérisé en ce que l'organe de support a la forme d'une barre de glissement (32) qui s'étend sans interruption sur toute la largeur des feuilles de verre (1, 16).

11. Dispositif suivant la revendication 9, caractérisé en ce que les organes de support ont la forme de patins de glissement (34) qui supportent la feuille supérieure simplement au niveau de ses deux bords.

12. Dispositif suivant la revendication 10 ou 11, caractérisé en ce que les organes de support (32, 34) sont pourvus sur leur surface supérieure en contact de glissement avec la pellicule de matière plastique (8) d'une couche (33) présentant de bonnes propriétés de glissement.

13. Dispositif suivant la revendication 12, caractérisé en ce que la couche qui présente de bonnes propriétés de glissement est en poly-(tétrafluoroéthylène).

**Claims**

1. Process for the production of laminated glass from at least two glass sheets and an intermediate thickness of a skin of plastics material, glued to the two glass sheets, according to which the skin of plastics material is joined by calendering to one glass sheet through the intermediary of a hardening adhesive material and this first glass sheet, provided with the skin of plastics material, is joined by calendering to the second glass sheet, also through the intermediary of a hardening adhesive material, characterized in that the adhesive material for the two adhesive films is applied each time in the form of a coherent and uniform film at a definitive thickness and in that the first glass sheet provided with the skin of plastics material as well as the second glass sheet provided with the adhesive film are joined together by calendering by means of a pair of rolls with maintenance of an entry angle $\alpha$ of 2 to 6°.

2. Process according to Claim 1, characterized in that the first glass sheet provided with the plastics material skin and the second glass sheet provided with the adhesive film are joined together by calendering with maintenance of an entry angle of 3 to 4°.

3. Process according to Claim 1 or 2, characterized in that the adhesive films are applied at their definitive thickness in the form of a coherent film by means of a sputtering device.

4. Process according to Claim 1 or 2, characterized in that the adhesive films are applied at their definitive thickness in the form of a coherent skin by means of a roller coating device.

5. Process according to any one of Claims 1 to 4, characterized in that the second glass sheet, coated with adhesive and the coated face of which faces upwards, and the first glass sheet, provided with the skin of plastics material and the plastics material film of which faces downwards, are introduced into the roll gap at a substantially horizontal orientation and with maintenance of the entry angle of 2 to 6°.

6. Process according to Claim 5, characterized in that the upper glass sheet, provided with the skin of plastics material, is supported by rollers in contact with the skin of plastics material, while the lower glass sheet, coated with adhesive, maintains its position under the effect of its own weight.

7. Process according to Claim 5 or 6, characterized in that the support for the upper glass sheet, provided with the skin of plastics material, is assured by rigid bars or support elements, on which the skin of plastics material slides.

8. Device for carrying out the process according to any one of Claims 1 to 7, comprising a pair of driven pressing rolls (22, 23) for joining the glass sheets (1, 16) together by calendering, a conveyor device (28, 28') upstream of the pair of rolls (22, 23) and a conveyor device (29) for the laminated pane behind the pair of rolls (22, 23), characterized in that the conveyor device situated upstream of the pair of rolls (22, 23) comprises a conveying system (conveyor rollers 28) for the glass sheet coated with adhesive (16) and support rollers (30), disposed above this conveying system, for supporting and conveying the glass sheet (1) provided with the plastics material skin (8), and in that the conveyor rollers (28) as well as the support rollers (30) are each disposed in a plane, the planes making an angle of approximately 2 to 6° at their line of intersection situated almost within the roll gap.

9. Device according to Claim 8, characterized in that immediately in front of the roll gap one or more support members (32, 34) for the upper sheet of glass (1) is or are installed on the frame (46) carrying the conveyor rollers (28) and the support rollers (30), on the upper surface of which members the skin of plastics material (8), joined to the upper glass sheet (1), slides.

10. Device according to Claim 9, characterized in that the support member has the form of a slide bar (32), which extends without interruption across the entire width of the glass sheets (1, 16).

11. Device according to Claim 9, characterized in that the support members have the form of slide skids (34), which support the upper sheet simply at its two edges.

12. Device according to Claim 10 or 11, characterized in that the support members (32, 34) are provided, on their upper face in sliding contact with the plastics material skin (8), with a film (33) possessing good sliding properties.

13. Device according to Claim 12, characterized in that the film possessing good sliding properties is of poly(tetrafluoroethylene).

**Patentansprüche**

1. Verfahren zur Herstellung von Verbundglas aus wenigstens zwei Glasscheiben und einer Zwischenschicht aus einer mit den beiden Glasscheiben verklebten Kunststoffolie, bei dem die Kunststoffolie unter Zwischenschaltung einer aushärtenden Klebemasse mit einer Glasscheibe zusammngewalzt, und diese mit der Kunststoffolie versehene erste Glasscheibe in einem zweiten Walzvorgang ebenfalls unter Zwischenschaltung einer aushärtenden Klebemasse mit der zweiten Glasscheibe zusammengewalzt wird, **dadurch gekennzeichnet,** daß die Klebemasse für die beiden Klebeschichten jeweils als gleichmäßiger zusammenhängender Film in der endgültigen Dicke aufgetragen, und daß die mit der Kunststoffolie versehene erste Glasscheibe und die mit der Klebeschicht versehene zweite Glasscheibe unter Beibehaltung eines Öffnungswinkels α von 2 bis 6 Grad mit Hilfe eines Walzenpaares zusammengewalzt werden.

2. Verfahren nach Anspruch 1, dadurch gekennzeichnet, daß die mit der Kunststoffolie versehene erste Glasscheibe und die mit der Klebeschicht versehene zweite Glasscheibe unter Beibehaltung eines Öffnungswinkels von 3 bis 4 Grad zusammengewalzt werden.

3. Verfahren nach Anspruch 1 oder 2, dadurch gekennzeichnet, daß die Klebeschichten mit Hilfe einer Sprühvorrichtung als zusammenhängender Film in der endgültigen Dicke aufgetragen werden.

4. Verfahren nach Anspruch 1 oder 2, dadurch gekennzeichnet, daß die Klebeschichten mit Hilfe einer Walzenauftragsvorrichtung als zusammenhängender Film in der endgültigen Dicke aufgetragen werden.

5. Verfahren nach einem der Ansprüche 1 bis 4, dadurch gekennzeichnet, daß die kleberbeschichtete zweite Glasscheibe mit der beschichteten Seite nach oben, und die mit der Kunststoff folie versehene erste Glasscheibe mit der Kunststoffschicht nach unten unter Beibehaltung des Öffnungswinkels von 2 bis 6 Grad in den Walzenspalt eingeführt werden.

6. Verfahren nach Anspruch 5, dadurch gekennzeichnet, daß die obere, mit der Kunststoffolie versehene Glasscheibe durch mit der Kunststoffolie in Berührung stehende Walzen abgestützt wird, während die untere, kleberbeschichtete Glasscheibe ihre Lage unter der Wirkung ihres Eigengewichts beibehält.

7. Verfahren nach Anspruch 5 oder 6, dadurch gekennzeichnet, daß die Abstützung der oberen, mit der Kunststoffolie versehenen Glasscheibe durch starre Schienen oder Stützkörper erfolgt, auf denen die Kunststoffolie gleitet.

8. Vorrichtung zur Durchführung des Verfahrens nach einem oder mehreren der Ansprüche 1 bis 7, mit einem die Glasscheiben (1,16) zusammenpressenden angetriebenen Druckwalzenpaar (22,23), einer Fördereinrichtung (28,28') vor dem Walzenpaar (22,23) und einer Fördereinrichtung (29) für die Verbundglasscheibe hinter dem Walzenpaar (22,23), dadurch gekennzeichnet, daß die Fördereinrichtung vor dem Walzenpaar (22,23) ein Transportsystem (Transportwalzen 28) für die kleberbeschichtete Glasscheibe (16), und oberhalb dieses Transportsystems angeordnete Stützwalzen (30) für die Unterstützung und den Transport der mit der Kunststoffolie (8) beschichteten Glasscheibe (1) aufweist, und daß die Transportwalzen (28) und die Stützwalzen (30) jeweils in einer Ebene angeordnet sind, die einen Winkel von etwa 2 bis 6 Grad einschließen und deren Schnittlinie etwa im Walzenspalt liegt.

9. Vorrichtung nach Anspruch 8, dadurch gekennzeichnet, daß unmittelbar vor dem Walzenspalt ein oder mehrere Stützorgane (32,34) für die obere Glasscheibe (1) an dem die Transportwalzen (28) und die Stützwalzen (30) tragenden Rahmen (46) angeordnet sind, auf deren oberer Oberfläche die mit der oberen GLasscheibe (1) verbundene Kunststoffolie (8) gleitet.

10. Vorrichtung nach Anspruch 9, dadurch gekennzeichnet, daß das Stützorgan als über die gesamte Breite der Glasscheiben (1,16) durchgehende Gleitscheine (32) ausgebildet ist.

11. Vorrichtung nach Anspruch 9, dadurch gekennzeichnet, daß die Stützorgane als die obere Glasscheibe lediglich an den beiden Rändern abstützende Gleitkufen (34) ausgebildet sind.

12. Vorrichtung nach Anspruch 10 oder 11, dadurch gekennzeichnet, daß die Stützorgange (32,34) auf ihrer oberen, mit der Kunststoffolie (8) in Gleitkontakt stehenden Oberfläche mit einer gute Gleiteigenschaften aufweisenden Schicht (33) versehen sind.

13. Vorrichtung nach Anspruch 12, dadurch gekennzeichnet, daß die Schicht mit guten Gleiteigenschaften aus Polytetrafluoraethylen besteht.

Fig. 1 A÷E₁

EP 0 248 706 B1

EP 0 248 706 B1

Fig. 1 E$_{2+3}$

Fig. 2

EP 0 248 706 B1

**Fig. 3**

Fig. 4